# EUROPEAN PATENT APPLICATION

(11) **EP 1 498 601 A1**
(43) Date of publication of application: **19.01.2005**
(21) Application number: 03102192.6
(22) Date of filing: 16.07.2003
(51) Int. Cl.: F02M 61/06, F02M 45/10, F02M 61/08

(54) **Fuel nozzle**

(71) Applicant: Delphi Technologies, Inc., Troy, MI 48007 (US)
(72) Inventor: WANLIN, Hugues, 6880, BERTRIX (BE)
(74) Representative: Beissel, Jean

(57) **Abstract**

The invention relates to a fuel nozzle comprising a nozzle body (10), a pintle (12) slidably mounted in a bore (14) of the nozzle body (10), and first restrictor means (16) for restricting the flow of fuel delivered by the nozzle to a first flow rate (18). In order to achieve a wider range of the flow rate, one or more second restrictor means (20) for restricting the flow of fuel delivered by the nozzle to a second flow rate (22) differing from the first flow rate are provided according to the invention.

## Description

### FIELD OF THE INVENTION

The present invention relates to a fuel nozzle for injecting a fuel spray into a combustion chamber of an internal combustion engine. Especially, the invention relates to a fuel nozzle for direct-injection gasoline applications.

### BACKGROUND OF THE INVENTION

Generally, these fuel nozzles feature a restrictor for determining the maximum flow rate of the injected fuel. This restrictor typically has a plurality of fuel channels and is located upstream of the valve seat of the fuel nozzle. The restrictor has the effect that beyond a certain stroke of the pintle of the fuel nozzle, the flow of fuel delivered by the nozzle remains substantially constant, even when the stroke of the pintle is further increased. This effect results in a characteristic curve of the nozzle (flow rate versus stroke) which shows that the flow rate is increased and reaches a plateau beyond a certain pintle stroke. In other words, the flow rate converges to a flow rate limit which is substantially determined by the restrictor.

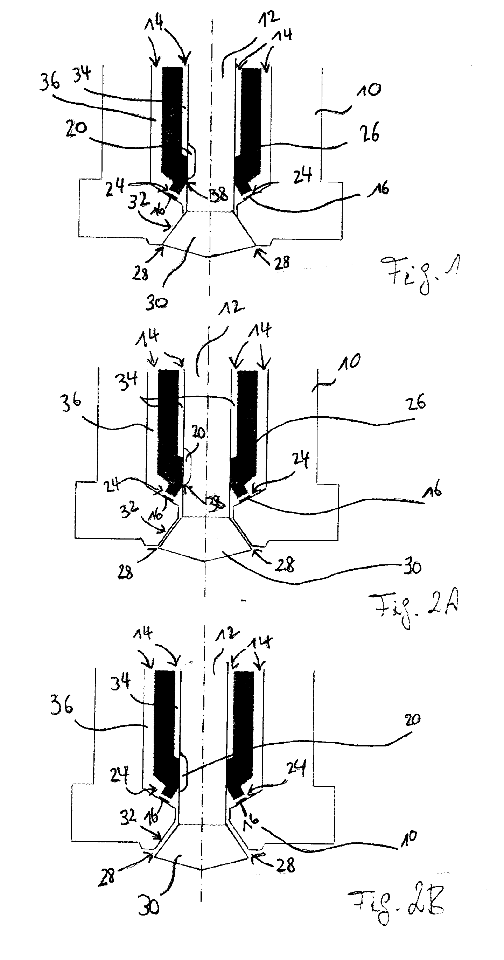

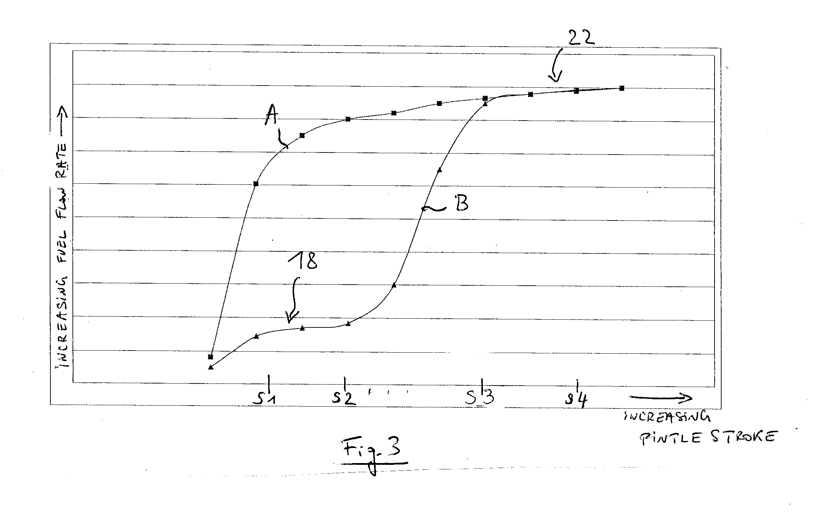

The characteristic curve of a typical fuel nozzle with a swirler is shown in Fig. 3 as curve A. According to curve A, the flow rate steeply rises for pintle strokes below S1 and then converges to a flow rate limit at pintle strokes larger than about S1. Beyond a pintle stroke of about S3, the flow rate does not substantially increase, but is nearly constant.

The reason for applying a restrictor in a fuel nozzle is to achieve an almost constant flow of fuel delivered by the fuel nozzle, even with small changes of the pintle stroke. Therefore, the known fuel nozzles are operated in the plateau zone. This also leads to a good accuracy in the amount of fuel flow delivery. Further, such fuel nozzles are able to operate in a wide range of static fuel flow. However, these known fuel nozzles have the disadvantage that they merely offer a limited range of the flow rate, as can be seen from curve A in Fig. 3.

### OBJECT OF THE INVENTION

It is an object of the present invention to provide a fuel nozzle which offers a wider range of the flow rate than the above described known fuel nozzles. This object is achieved by a fuel nozzle as claimed in claim 1.

### SUMMARY OF THE INVENTION

The present invention relates to a fuel nozzle comprising a nozzle body, a pintle slidably mounted in a bore of the nozzle body, and first restrictor means for restricting the flow of fuel delivered by the nozzle to a first flow rate. According to the invention, second restrictor means for restricting the flow of fuel delivered by the nozzle to a second flow rate, differing from the first flow rate, are provided. Both restrictor means generate two plateaus in the characteristic flow curve of the nozzle and, therefore, allow a wider range of operating flow rates.

Due to the two restrictor means, the fuel nozzle comprises two different characteristic flow rates corresponding to the mentioned two plateaus in the flow curve of the nozzle. The second plateau corresponding to the second flow rate can be similar to the plateau of a fuel nozzle with a single restrictor. Then, the first flow rate or first plateau, respectively, should be smaller than the second flow rate or second plateau, respectively.

In a preferred embodiment of the invention, the first restrictor means are adapted to restrict the fuel flow independent of a pintle stroke. Therefore, the first restrictor means can be designed similar to the restrictor means applied in single swirler fuel nozzles which restrict the flow rate to a predetermined limit.

The second restrictor means are preferably designed so as to be "activated" beyond a given pintle stroke. In other words, moving the pintle beyond a predetermined pintle position causes fuel to start flowing through the second restrictor means in addition to the fuel flowing through the first restrictor means. In addition, the second restrictor means may be adapted to restrict the fuel flow in a way that is either dependent or independent from the pintle stroke beyond the activation position.

However, according to a further preferred embodiment, the second restrictor means are adapted to restrict the flow of fuel depending on a pintle stroke. In contrast to the first restrictor means, the second restrictor means can control the flow of fuel corresponding to the pintle stroke, i.e. when the stroke rises also the flow of fuel rises until a predetermined limit corresponding to the second flow rates or second plateau, respectively.

In order to achieve a restriction of the flow of fuel independent of a pintle stroke, the first restrictor means can comprise holes. In this case, the limitation of the flow or flow rate is determined by the cross-sectional area of these holes.

These holes can be formed in a swirler arranged in the bore. The swirler can be press-fitted in the bore. The holes can be formed as helicoidal channels of the swirler in order to give a swirl movement to the fuel passing therethrough.

In a preferred embodiment, the second restrictor means comprise a fuel channel which forms a passage from the fuel inlet side of the bore to the outlet of the nozzle beyond a predetermined pintle stroke. In other words, the passage formed by the fuel channel is opened above a predetermined stroke of the pintle. In addition, the amount of fuel passing in this passage preferably depends on the pintle stroke until a maximum stroke, which determines the second flow rate.

Typically the fuel channel is a recess in the exterior surface of the pintle. This recess can be covered by a projection of the swirler, wherein the coverage depends on the pintle stroke.

A fuel nozzle according to the present invention is preferably to be used with a lift control of the pintle. This means that an actuator, which operates the pintle, should be capable of moving the pintle to two different strokes; such an actuator may e.g. be a piezoelectric actuator. A fuel injector comprising a fuel nozzle in accordance with the invention can thus be advantageously used in fuel injection systems requiring different injection flow rates.

### BRIEF DESCRITPION OF THE DRAWINGS

The present invention will now be described, by way of example, with reference to the accompanying drawings, in which:
Fig. 1 is a section-view of an embodiment of a fuel nozzle according to the present invention;
Fig. 2A is a section-view of the fuel nozzle of Fig. 1, wherein the pintle is lifted by a first, short stroke;
Fig. 2B is a section-view of the fuel nozzle of Fig. 1, wherein the pintle is lifted by a second, long stroke, which opens the fuel passage of the second restrictor means, according to the invention; and
Fig. 3 shows a diagram of the fuel flow rate versus the stroke of the pintle with a characteristic curve of a prior art fuel nozzle and of an embodiment of a fuel nozzle according to the invention.

### DETAILED DESCRIPTION OF PREFERRED

Preferred embodiments of a fuel nozzle in accordance with the invention will now be described. In the present embodiments, the fuel nozzle is designed to be used in a direct injection gasoline system.

In the following description the same and/or equal and/or similar elements can be denoted with the same reference numerals.

Fig. 1 shows a fuel nozzle with a nozzle body 10 which comprises a bore 14. A pintle 12 is slidably mounted in the bore 14. The bore 14 further comprises a swirler 26 which is press-fitted in the bore 14. The swirler 26 surrounds the pintle 12, i.e., the pintle 12 is moveably arranged in the swirler 26. The pintle 12 comprises a closing member 30, which is receivable on a seat 32 of the nozzle body 10. Closing member 30 and seat 32 form a nozzle valve. The shown fuel nozzle is an outward opening type fuel nozzle, i.e., the nozzle is opened by a stroke on the pintle 12 which causes the closing member 30 to lift from it's seat 32 on the nozzle body 10 and to open an outlet passage 28 formed between the inner surface of the seat 32 and the outer surface of the closing member 30. During operation, when the fuel nozzle is opened, i.e. the closing member 30 is lifted from it's seat 32, fuel is pressed through the bore 14 and through the outlet 28 in order to be sprayed as conical spray into a combustion chamber of an internal combustion engine.

In order to achieve a constant flow rate of the fuel injected into the combustion chamber, restrictor means are provided. First restrictor means 16 are formed in the swirler 26 as holes 24. These holes 24 limit the flow rates to a predetermined first flow rate. The limitation according to the holes 24 is independent from the stroke on the pintle 12. The holes 16 can be inner channels of the swirler 26, which give a swirl movement to the fuel passing therethrough, such as e.g. helicoidal channels.

It will be appreciated that second restrictor means 20 are formed by a recess 20 in the form of a groove in the exterior surface of the pintle 12. This groove 20 forms a passage for the fuel from an inner fuel channel 34 of the bore 14 to the outlet 28 of the nozzle. The inner fuel channel 34 is formed by the exterior surface of the pintle 12 and the swirler 26 which divides the bore 14 into two fuel channels: the inner fuel channel 34 and an outer fuel channel 36. The fuel flow through the outer channel 36 is controlled by the first restrictor means 16 whereas the fuel flow through the inner fuel channel 34 is controlled by the second restrictor means 20. In the present embodiment, the total passage section of the first and second restrictor means substantially equals the total passage section of a conventional single restrictor fuel nozzle. This means that the maximum flow rate of the first restrictor means 16 and of the second restrictor means 20 (at a specified pintle stroke) is similar to the maximum flow rate of a single restrictor so that the delivered fuel quantity is, for a long stroke of the pintle, similar to the quantity delivered by conventional fuel nozzles.

In the present embodiment, the second restrictor means 20 is designed as a single groove extending in the exterior pintle surface. This groove should not extend over the whole periphery of the pintle, since the exterior pintle surface also serves for guiding of the pintle in the nozzle. However, there may two or more grooves.

Fig. 2A shows the fuel nozzle of Fig. 1 when the closing member 30 of the pintle 12 is lifted from it's seat 32 by a short pintle stroke of about S1 to about S2. As can be seen from Fig. 2A, the fuel passage of the second restrictor means 20 is closed by a projection 38 of the swirler 26. This means that only the first restrictor means 16 are "active" or in operation, i.e. only the first restrictor means 16 restrict the flow of fuel through the outlet 28. A fuel flow is only possible through the outer fuel channel 36 of the bore through the holes 24 of the first restrictor means 16 to the outlet passage 28. This causes a first plateau or first flow rate 18 in the characteristic curve of this fuel nozzle, as can be seen from Fig. 3 showing a typical characteristic flow rate curve of a prior art fuel nozzle with a single restrictor (curve A) and of an embodiment of the inventive fuel nozzle with two restrictors.

When the stroke of the pintle 12 rises, the second restrictor means opens it's fuel passage, as can be seen from Fig. 2B. Then, the flow rate rises again until a second flow rate limiting the overall flow rate of the fuel nozzle. This can also be seen from the characteristic curve B in Fig. 3 (increasing pintle strokes are indicated by S1, S2, S3 and S4). Above a pintle stroke of about S2, the fuel passage of the second restrictor means 20 opens and fuel is pressed from the inner fuel channel 34 through the passage of the second restrictor means 20 to the outlet passage 28 which increases the overall flow rate of the fuel nozzle. At a pintle stroke of about S3 and beyond, the flow rate is limited to a second flow rate 22 or a second plateau of the characteristic curve B, as shown in Fig. 3. The second flow rate 22 herein corresponds to the flow rate of a prior art fuel nozzle a characteristic curve A of which is also shown in fig. 3 for the reason of comparison. Due to the two flow rates 18 and 22, a wider control range of the flow rate of the fuel nozzle can be achieved compared to a limited range of flow rate of a prior art fuel nozzle as demonstrated by the characteristic curve A in fig. 3. According to curve A, a pintle stroke of about S1 or beyond results in a substantially constant flow rates, even when the stroke is further increased. Typically, a prior art fuel nozzle with such a characteristic curve A is operated in the plateau zone. In contrast to this, the present fuel nozzle (with a characteristic curve B) can be operated in two plateau zones corresponding to the two flow rates 18 and 22.

It should be noted that, according to the invention, further restrictor means can be provided in the fuel nozzle in order to generate more than two plateaus in the characteristic curve B of the inventive fuel nozzle. This further widens the range of operation, i.e. generates several operational points with different flow rates.

### LIST OF REFERENCE NUMERALS

- 10: Nozzle body
- 12: Pintle
- 14: Bore of the nozzle body
- 16: First restrictor means
- 18: First flow rate
- 20: Second restrictor means
- 22: Second flow rate
- 24: Restrictor holes
- 26: Swirler
- 28: Outlet of the fuel nozzle
- 30: Closing member of the pintle
- 32: Seat of the closing member
- 34: Inner fuel channel of the bore
- 36: Outer fuel channel of the bore

## Claims

1. Fuel nozzle comprising a nozzle body (10), a pintle (12) slidably mounted in a bore (14) of the nozzle body (10), and first restrictor means (16) for restricting the flow of fuel delivered by the nozzle to a first flow rate (18),
**characterized by**
second restrictor means (20) for restricting the flow of fuel delivered by the nozzle to a second flow rate (22) differing from the first flow rate.

2. The fuel nozzle according to claim 1, **characterized in that** the first and second restrictor means (16, 20) are designed so that the second flow rate (22) is larger than the first flow rate (18).

3. The fuel nozzle according to claim 1 or 2, **characterized in that** the first restrictor means (16) are adapted to restrict the flow of fuel independent of a pintle stroke.

4. The fuel nozzle according to any of claims 1, 2 or 3, **characterized in that** the second restrictor means (20) are adapted to restrict the flow of fuel depending on a pintle stroke.

5. The fuel nozzle according to any one of the preceding claims, **characterized in that** the second restrictor means are activated beyond a predetermined pintle stroke.

6. The fuel nozzle according to any of the preceding claims, **characterized in that** the first restrictor means (16) comprise holes (24).

7. The fuel nozzle according to claim 6, **characterized in that** the holes (24) are formed in a swirler (26) arranged in the bore (14).

8. The fuel nozzle according to any of claims 1 to 7, **characterized in that** the second restrictor means (20) comprise a fuel channel which forms a passage from the fuel inlet side of the bore (14) to the outlet (28) of the nozzle beyond a predetermined pintle stroke.

9. The fuel nozzle according to claim 8, **characterized in that** the fuel channel is a recess (20) in the exterior surface of the pintle (12).

10. A fuel injector comprising a fuel nozzle as claimed in any one of the preceding claims.
